Europäisches Patentamt

European Patent Office

Office européen des brevets

(19)

(11) Publication number: **0 096 570**
**B1**

# EUROPEAN PATENT SPECIFICATION

(12)

(45) Date of publication of patent specification: 24.08.88

(51) Int. Cl.⁴: **G 02 B 7/11**, G 02 B 23/08

(21) Application number: 83303249.3

(22) Date of filing: 06.06.83

(54) An optical system focus-state detector.

(30) Priority: 05.06.82 JP 96534/82
05.06.82 JP 96535/82

(43) Date of publication of application:
21.12.83 Bulletin 83/51

(45) Publication of the grant of the patent:
24.08.88 Bulletin 88/34

(84) Designated Contracting States:
AT BE CH DE FR GB IT LI NL SE

(56) References cited:
EP-A-0 080 340
FR-A-2 477 291
US-A-3 969 575
US-A-4 079 247
US-A-4 135 207
US-A-4 389 565

PATENT ABSTRACTS OF JAPAN, vol. 6, no. 8,
January 19, 1982, page 886(P-98)

(73) Proprietor: OLYMPUS OPTICAL CO., LTD.
43-2, 2-chome, Hatagaya Shibuya-ku
Tokyo 151 (JP)

(72) Inventor: Shishido, Yoshio
No. 2-1-30-512, Fuchinobe
Sagamihara-shi Kanagawa-ken (JP)
Inventor: Takahashi, Susumu
Olympus Oowada ryo 4-22-13, Oowadacho
Hachioji-shi Tokyo (JP)
Inventor: Miyazaki, Atsushi
No. 3 Olympus Oowada ryo 5-19-10, Oowadacho
Hachioji-shi Tokyo (JP)
Inventor: Matsuo, Kazumasa
No. 3-1-7-304, Ochiai
Tama-shi Tokyo (JP)
Inventor: Nishigaki, Shinichi
No. 3 Olympus Oowada ryo 5-19-10, Oowadacho
Hachioji-shi Tokyo (JP)
Inventor: Kato, Shinichi
No. 2 Olympus Oowada ryo 7-14-11, Oowadacho
Hachioji-shi Tokyo (JP)
Inventor: Nakamura, Takeaki
No. 6-9-8, Asahigaoka
Hino-shi Tokyo (JP)
Inventor: Ishikawa, Akibumi
No. 4425, Kamiongatamachi
Hachioji-shi Tokyo (JP)

Courier Press, Leamington Spa, England.

**0 096 570**

(74) Representative: **Kennedy, Victor Kenneth et al**
**G.F. REDFERN & CO. Marlborough Lodge 14**
**Farncombe Road**
**Worthing West Sussex BN11 2BT (GB)**

## Description

The present invention relates to an optical system focus-state detector having means for projecting a precisely shaped light beam on to an object that is to be viewed or recorded and photometrically analysing the light beam reflected from the object at analysis means arranged in a plane conjugate with the plane in which a correctly focussed image is to be viewed or recorded. Generally, in optical viewing apparatus such as endoscopes, or in photographic or TV cameras etc. focus-state detectors are widely employed for examining whether a clear image is available from the optical system, or for determining the optimum setting to ensure the object may be clearly focussed so as to be photographed or observed. Occasionally there may be additionally arranged a means which can automatically adjust the optical system to the correct position for a clear focussing condition.

If the object details are poorly defined or obscure, or a low-power optical system has to be employed, the known focus-state detectors, which are generally of smaller power, cannot perform effectively for focus-detection.

An irradiation means for directing a defined light beam toward an object is described in the Japanese Patent Publication No. 19,810/74, but the proposed arrangement employs an optical system independent from the photographic lens system, and such auxiliary optical systems are not readily available in apparatus as endoscopes, etc., that photograph with a single light path optical system.

A split prism is employed in an arrangement described in Japanese Patent Application Disclosure No. 128,923/81, for use where the focus-state detection apparatus requires a higher accuracy, and a plurality of light-receiving elements are requied, together with a support system for examining the focussing state by comparing output signals that is rather complicated, and constitutes a particularly costly arrangement when intended for use in products that are only required in a relatively small quantity.

Further, there is disclosed in Japanese Patent Application Disclosure No. 125,713/81, a focus-state detection apparatus capable of determining whether a system is well-focussed or not, even in the case of objects having obscure details, dimly illuminated, or when using low-power optical systems or dark-field systems. A flickering light is projected from a source to the object, and the power-output signal level during the extinguished periods is subtracted from the power-output signal level during light projection periods, to alleviate the influence of external light on the reflected light from said light source. However, in addition to the provision of a definite focus surface for a film etc., two locations for a location conjugate with said definite focus surface are needed, arranged on each side of said focussed surface, and the light projected on the object is arranged at one of said locations. In this conventional example, relatively large surfaces are necessary for the light source and the light-receiving means, and structures of optical system and circuit system for detecting the focussed condition are complex, so that the detection apparatus is expensive.

On the other hand, when a known focus-state detection apparatus is employed with an endoscope, to detect the focusing condition, the light reflected from objects such as internal organs inside a living body cavity has low contrast, and the viewing optical system of endoscopes have a relatively dark sight. As it is often necessary to photograph from a very short distance, the depth of focus then becomes so small that both the focus-state detection apparatus using contrast analysis methods and the setting apparatus for automatically focusing are rather unreliable.

Our Application No. 82 306169.2 filed on the 19th November 1982, claimed multiple priorities ranging from 19th November 1981 to 29th January 1982, but was not published until the 1st June 1983, after the filing of the present Application.

That earlier Application is now granted as EP—B—0 080 340 with effect from the 27th August 1986, and one object of that invention was to provide a device for detecting the focused state of an optical system, even for a dark object that is to be photographed or observed via an image-forming optical system, the device having a simple structure, requiring little space, and being economical to manufacture, yet only requiring a single light path optical system.

According to one preferred embodiment of that earlier invention there is provided a device for detecting the focused state of an optical system in which the image of an object is formed on a predetermined surface by said optical system using a point light source to project light to the object via said optical system to be reflected by said object and received back via said optical system on a photo-electric transducer having a relatively small aperture at a position that is substantially optically conjugate with said image forming surface, characterised in that said point light source is formed by at least one aperture in said photo-electric transducer.

The invention was described with reference to a number of embodiments of rigid endoscopes, all of which utilised one or more apertures in the photo-electric transducer sensing the reflected light to serve as light projection aperatures to inject light into the optical system of the endoscope, to be reflected back to control the focusing of the device.

One object of the present invention is to provide a reliable and capable focus-state detection apparatus which is effective, even for objects of optically low contrast, such as living organs in a body cavity, or for general use in industrial or photographic systems, to give high accuracy in a simple manner at relatively low cost.

In accordance with the invention there is provided an optical system focus-state detector wherein the focus state of an optical image of an object to be photographed, as formed in a predetermined image-forming plane in which a film or the like is arranged, is detected to establish whether the image is clearly formed by means projecting a sharply delimited light spot onto the object, the means comprising a light source, a condensor lens, an apertured light stop and fibre-optic guide having an output offset from the optical axis of the distal end of the image-forming system and in close proximity to this end, and provided with light-receiving means for detecting the focus state of an image of the said light spot produced by the said image-forming system on a light sensitive surface of a photo-electric sensor arranged with its light-receiving surface opposed to an image-forming lens and on the optical axis of this lens, provided in the centre of said light-receiving surface with a minute non-sensitive zone on which the relatively brilliant region of fixed shape projected onto said object will be imaged when said system is correctly focused, so that focusing will be detected by determining whether or not the light-measuring output of said light-receiving element is at a minimum.

Thus the present invention differs from our above-mentioned Patent of earlier priority date by virtue of the fact that the focus-detection light spot is not transmitted by the optical system onto the object, but is separately projected, to be returned via the optical system.

The invention will now be described with reference to the drawings, in which:—

Figure 1 schematically illustrates one exemplary embodiment of an optical viewing scope in accordance with the invention; and

Figure 2 is a schematic detail of the light-receiving means used.

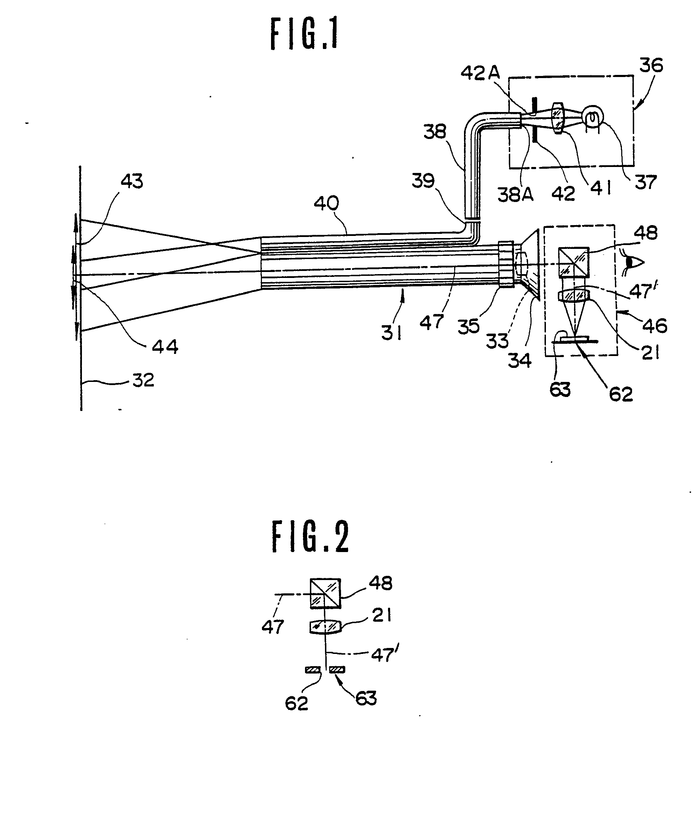

An exemplary embodiment, in the form of a rigid endoscope, will now be described with reference to Figures 1 and 2.

An object 32 arranged in front of an endoscope 31 is focused by an objective optical system arranged in the insertion sheath of the endoscope, so that inspection of the object 32 can be effected through an eyepiece 34 containing an optical system 33 as an image-transmitting means. A focus ring 35 is provided for controlling focusing by displacement of the optical system, this ring being mounted on the periphery of the eyepiece 34.

An endoscope 31 is provided with light-guide fibres 40, mounted on the sheath wall in the embodiment shown in Figure 1, which extends from a light-guide port 39 to the sheath tip. An intermediate light-guide cable 38 couples the port 39 to a light source 36 containing a lamp 37, whereby the object 32 is illuminated from the tip of the light-guide 40.

A condenser lens 41 and an apertured light stop 42 are arranged between the lamp 37 and the end face 38A of the light-guide cable 38, whereby radiation from the light source 37 is collected by the condenser lens 41 and the end face 38A lit by illumination of great intensity through the aperture 42A formed in the centre of the light stop 42, so that an intense illumination is provided in a small central area, for example, a zone 44 smaller than the normal visual field 43, as shown in Figure 1.

A contrast detector 46 containing a light-receiving means in the form of a light sensor 63 is mounted on said eyepiece 34, as will be described with reference to Figure 2.

A beam-splitter 48 formed by two prisms or a semi-transparent mirror is arranged on the optical axis 47 behind the eyepiece 34 in said contrast detector 46. By positioning one's eye behind the beam-splitter 48, the image of the object 32 becomes visible. The light sensor 63 is arranged on the reflected optical axis 47' from the beam-splitter 48, with the light-receiving surface of the sensor 63 located at a predetermined image position, for example a position spaced sufficiently to give clear vision from the viewer or optically conjugate with the position of the focused image formed by the optical system 33.

If the optical image of the object 32 is obtained clearly at the distance of clear vision, it is focused clearly on the pin-hole or non-sensitive light-receiving surface 62 of the optical sensor 63 arranged on the optical axis 47'.

The operation of this embodiment will now be described.

The light beam from the light source 36 is collected by the lens 41 and its cross-section defined by the light stop 42, to be projected to the object 32 through light-guide cable 38 and light-guide 40. As shown in Figure 1, this injected light beam has a sharp contrast because it it concentrated within a narrow zone 44.

Therefore, provided that the angular position of the focus ring 35 is set so that the optical image of the object 32 obtained by the eyepiece optical system 33 is correctly focused, the viewer can see the image illuminated within said narrow zone 44, and the optical image corresponding to said narrow zone 44 is clearly directed and defined on the pin-hole or non-sensitive light-receiving surface 62 of the optical sensor 63 arranged on the optical axis 47' at the conjugate position for said image position.

If the angular position of the focus ring 35 is unsuitable, and the focus state given by the eyepiece optical system is not well-focused, i.e. either in the shorter focused state or the rear focus state, the light-beam will not be clearly focused on the pin-hole or non-sensitive light-receiving surface 62 of the light sensor 63. Accordingly, a level higher than a certain value will be found, and incorrect focus indicated.

The embodiment of the present invention shown in Figure 2 is designed to detect whether or not the output level of a photo-electric sensor 63 for the predetermined area of illumination exceeds a predetermined value, to detect the focused state from the output level of the photo-electric sensor 63, which becomes a minimum value or dark current level after receiving illumination in the correct focus state, the photo-electric sensor 63 being provided with a pinhole-like opening or minute non-sensitive section 62, which constitutes part of the sensor arrangement 46 shown in Figure 1.

As described, if illumination is projected onto a narrow zone on the object, with great optical contrast, thereby forming an image having a great difference of optical intensity distribution according to whether or not the image is correctly focused, detecting the focused condition by the light-receiving element is greatly facilitated.

In every case the light spot projection remains well-defined because of the lens 41, but the area of the intensely illuminated zone 44 will be greater if the distance to the object is greater, and thus if the focusing is incorrect the returning light will not be confined to the pin-hole or non-sensitive spot 62, and the sensor output will not be at a minimum, the actual difference in levels being dependent not only on the focus setting but on the distance of the object from the distal tip of the endoscope.

## Claims

1. An optical system focus-state detector wherein the focus state of an optical image of an object (32) to be photographed, as formed in a predetermined image-forming plane in which a film or the like is arranged, is detected to establish whether the image is clearly formed by means projecting a sharply delimited light spot (42) onto the object (32), the means comprising a light source (37), a condensor lens (41), an apertured light stop and a fibre-optic light guide (38, 40) having an output off-set from the optical axis of the distal end of the image-forming system (33) and in close proximity to this end, and provided with light-receiving means (46) for detecting the focus state of an image of the said light spot produced by the said image forming system (33) on a light sensitive surface of a photo-electric sensor (63) arranged with its light-receiving surface opposed to an image-forming lens (21) and on the optical axis (47') of this lens, provided in the centre of said light-receiving surface with a minute non-sensitive zone (62) on which the relatively brilliant region of fixed shape projected onto said object will be imaged when said system is correctly focused, so that focusing will be detected by determining whether or not the light-measuring output of said light-receiving element (63) is at a minimum.

2. A focus-state detector as claimed in Claim 1, characterised in that said non-photosensitive zone (62) is a pinhole.

3. A focus-state detector as claimed in Claim 1 or Claim 2, characterised by its use in the image-forming optical system (33) of an endoscope (31).

## Patentansprüche

1. Optisches System mit Scharfeinstellungsdetektor, wobei die Scharfeinstellung des optischen Bildes eines zu fotografierenden Objektes (32), wie es in einer vorgegebenen Bildebene, in der ein Film oder dergleichen angeordnet ist, gebildet wird, ermittelt wird, um festzustellen, ob das Abbild klar ist, und zwar durch Mittel, die einen scharf begrenzten Lichtfleck auf das Objekt (32) projizieren, wobei diese Mittel eine Lichtquelle (37), eine Kondensorlinse (41), eine Spaltblende und einen Lichtfaserleiter (38, 40) aufweisen, dessen Auslaß versetzt von der optischen Achse des distalen Endes eines abbildenden Systems (33) und nahe dessen Ende vorgesehen ist und wobei das Licht empfangende Mittel (46) zur Erkennung der Schärfe des Abbildes dieses Lichtflecks, das von diesem abbildenden System (33) auf einer lichtempfindlichen Oberfläche eines fotoelektrischen Sensors (63) abgebildet wird, vorgesehen sind, dessen lichtempfindliche Fläche einer das Abbild erzeugenden Linse (21) gegenüber und auf der optischen Achse (47') dieser Linse liegt und wobei in der Mitte der lichtempfindlichen Fläche eine sehr kleine nicht empfindliche Zone (62) vorgesehen ist, auf der der relativ brillante Bereich fester Form, der auf das Projekt projiziert worden ist, bei richtiger Scharfeinstellung des Systems abgebildet wird, so daß die Scharfeinstellung dadurch ermittelt werden kann, daß festgestellt wird, ob der Lichtmeßausgang des lichtempfindlichen Elementes (63) bei einem Minimum liegt.

2. Optisches System nach Anspruch 1, dadurch gekennzeichnet, daß die nicht fotoempfindliche Zone (62) ein Loch ist.

3. Optisches System nach Anspruch 1 oder 2, gekennzeichnet, durch die Anwendung in dem das Abbild erzeugenden System (33) eines Endoskopes (31).

## Revendications

1. Détecteur d'état de focalisation d'un système optique dans lequel l'état de focalisation d'une image optique d'un objet (32) à photographier, telle qu'elle est formée dans un plan prédéterminé de formation d'image dans lequel un film ou analogue est disposé, est détectée pour établir si l'image est formée clairement par des moyens projetant un point lumineux (42) clairement délimité sur l'objet (32), les moyens comprenant une source lumineuse (37), une lentille convergente (41), un élément d'arrêt de lumière ajouré muni d'une ouverture et un guide de lumière à fibre optique (38, 40) dont la sortie est décalée par rapport à l'axe optique de l'extrémité distale du système de formation d'image (33) et à proximité étroite de cette extrémitré, et comprenant des moyens de réception de lumière (46) pour détecter l'état de focalisation d'une image dudit point lumineux produit par ledit système de formation d'image (33) sur une surface sensible à la lumière d'un capteur photo-électrique (63) placé de manière que sa surface de réception de lumière soit en face d'une lentille de formation d'image (21) et sur l'axe optique (47') de cette lentille, comprenant au centre de ladite surface de réception d'image une minuscule zone non sensible (62) sur laquelle la région relativement brillante et de forme fixe qui est projetée sur ledit objet forme une image quand le système est correctement focalisé, de maniére que la focalisation soit détectée en déterminant si la sortie de mesure de lumière dudit élément récepteur de lumière (63) est ou ou non au minimum.

2. Détecteur d'état de focalisation selon la revendication 1, caractérisé en ce que ladite zone non photosensible (62) est un trou d'épingle.

3. Détecteur d'état de focalisation selon la revendication 1 ou la revendication 2, caractérisé en ce qu'il est utilisé dans le système optique de formation d'image (33) d'un endoscope (31).

# FIG.1

# FIG.2